Europäisches Patentamt

European Patent Office

Office européen des brevets

(11) Publication number: **0 139 509**
A2

# EUROPEAN PATENT APPLICATION

(21) Application number: 84306829.5

(22) Date of filing: 11.10.84

(51) Int. Cl.⁴: **E 05 D 11/10**
**B 60 R 1/06**

(30) Priority: 11.10.83 GB 8327165

(43) Date of publication of application:
02.05.85 Bulletin 85/18

(84) Designated Contracting States:
BE DE FR GB IT NL SE

(71) Applicant: AUTOSAFE LIMITED
Trinity Road
Richmond Surrey, TW9 2LG(GB)

(72) Inventor: Lowe, Christopher Shelsen
44 Knights Hill
Aldrige Walsall WS9 0TG(GB)

(74) Representative: Bayliss, Geoffrey Cyril et al,
BOULT, WADE & TENNANT 27 Furnival Street
London EC4A 1PQ(GB)

(54) A hinge.

(57) A hinge (10), for example for rear view mirror for a vehicle, comprises first and second members (12, 11) hinged about a pin (13) secured to the second member (11). A detent arrangement normally holds the two members in one position relative to each other, but permits them to be deflected from that position. The detent arrangement comprises a camming surface (33) on the first member and a follower on the hinge pin which is spring biassed against the camming surface.

In order to provide for low friction the follower comprises a pair of rollers (32) which are mounted on respective axles projecting radially from the hinge pin. Furthermore, in order to reduce friction and wear, the rollers (32) taper towards the axis of the hinge pin and the camming surface is correspondingly inclined. Thus, along the line of contact of each roller with the camming surface, the roller can roll along the camming surface rather than skid.

FIG. 1.

## A HINGE

This invention relates to a hinge and particularly, though not exclusively, to a hinge for use in mounting a mirror to a vehicle,

According to the present invention there is provided a hinge in which first and second members are hinged about a hinge axis, the hinge further comprising a detent mechanism which comprises a camming surface on the first member extending at least partly around the hinge axis, at least one roller mounted on the second member offset from the hinge axis for rotation about an axis extending towards the hinge axis and biassing means for urging said roller into rolling contact with the camming surface, said roller tapering towards the hinge axis.

By using a roller to act as a follower for the camming surface, rather than a follower which does not move relative to the second member, friction in the detent mechanism is reduced, and therefore the force required to move the hinge from the detent position can be more reliably set by the shape of the camming surface and the strength of the biassing means. Furthermore, by tapering the roller towards the hinge axis, slipping of the roller relative to the camming surface over part of the contact region of the roller with the camming surface can be reduced or eliminated, thus further reducing friction and also reducing wear of the roller and/or camming surface.

By way of example, an embodiment of the invention will now be described with reference to the accompanying drawings, in which:

Figure 1 is a sectional view through a hinge according to the invention used for mounting a mirror on a vehicle.

Figure 2 is a sectional view along the line II-II of Figure 1, and

Figure 3 is development of the radial cam form of the hinge of Figure 1.

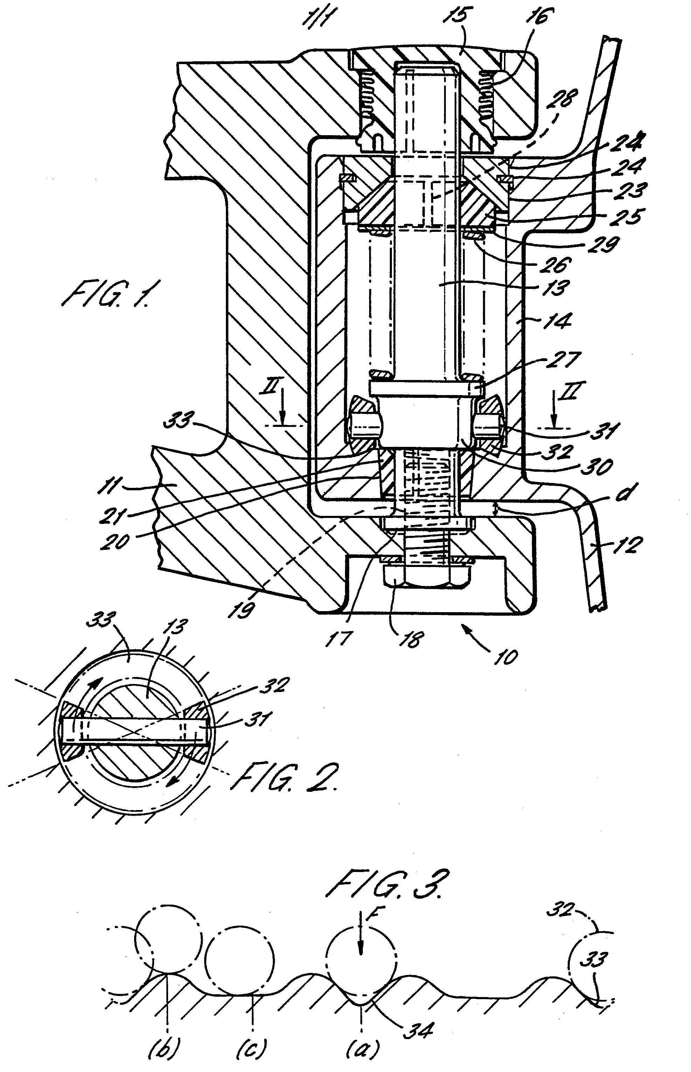

A hinge 10 is shown in Figure 1 for mounting a mirror, which is carried at the end of an A-frame 11, to a vehicle such as a truck or lorry. The hinge 10 comprises a shaft 13 which is located within a housing 14 for attachment to the vehicle by an integral bracket 12. The shaft 13 extends clear of the housing 14 at either end and it is to these end portions of the shaft that the upper and lower legs of the A-frame 11 are connected. The upper conneciton is made by means of a retention plug 15 of plastics material which fits over the end of the shaft 13 and which is press-fitted into a hole 16 in the upper leg of the A-frame 11. For the lower connection, the shaft 13 has a radially-splined end face 17 against which the lower leg of the a-frame 11 is clamped by means of a bolt 18 which screws into a tapped hole 19 in the shaft 13. The A-frame 11 is of a relatively soft material, such as aluminium, so that the radial splines on the end face 17 of the shaft 13 bite into it and thereby create a solid connection between the A-frame 11 and the shaft 13.

The lower end of the housing 14 has a tapered hole 20 in which is located a split taper bush 21 of plastics material. The bush 21 rotatably mounts the lower end of the shaft 13. The upper end of the housing 14 has a plain hole 22 in which a thrust ring 23, preferably of steel, is retained by means of a spring ring 24. The inner face of the thrust ring 23 is frusto-conical in cross-section. The upper end of the shaft 13 is rotatably mounted in a split taper sleeve 25 of plastics material. A spring 26, which at its lower end is arranged to seat against a shoulder 27 on the shaft 13, urges the taper sleeve 25 towards the thrust ring 23. The spring 26 forces the taper sleeve 25 against the frusto-conical face of the thrust ring 23 and, because the taper sleeve 25 is split, as at 28, the effect is to close the taper sleeve 25 around the shaft 13, thereby centralising the shaft and eliminating the possibility of radial play. A steel thrust washer 29 is preferably interposed between the upper end of the spring 26 and the taper sleeve 25 so that the respective rotating and non-rotating parts of the assembly, between which sliding frictional contact occurs, are of suitably compatible material.

In a shouldered portion 30 of the shaft 13 towards its lower end there is mounted a crosspin 31 of relatively hard steel. The ends of the crosspin 31 stand proud of the shaft 13 on either side and serve to mount rotatably a pair of radial taper rollers 32. The taper rollers 32 are arranged and in fact urged by the bias of spring 26 to run on a profiled track 33 which is incorporated into the lower portion of the housing 14. The track 33 is not only profiled to match the taper of the taper rollers 32 as Figure 1 indicates, but also to include a radial cam form, a 360° development of which is shown in Figure 3.

Looking at Figure 3 in more detail: (a) indicates a detent position along the cam form in which each taper roller 32 is located in a respective notch 34 defined between two lobes in the cam form. In this detent position, the taper rollers 32 cannot move out of their respective notches 34 over either lobe without overcoming the biassing force F of spring 26. In this detent position, the mirror would be in its normal operative position, that is, with the A-frame 11 extending out from the vehicle 12 so that the driver can see behind in the mirror. The strength of spring 26 is chosen such that this position of the mirror will be maintained throughout normal driving conditions for the vehicle, whilst allowing the driver to be able to retract the mirror to a position alongside the vehicle if the occasion demands. On such an occasion, the A-frame 11, and hence also the shaft 13, is forcefully rotated and, after a predetermined torque has been reached, this in turn causes the taper rollers '32 to rise up out of their respective notches 34 and over the lobes against the bias of spring 26.. The maximum rise position on the cam form is indicated at (b) in Figure 3, and a suitable clearance d is left between the lower leg of the A-frame 11 and the housing 14 to allow for this rise. After being forced past the maximum rise position at the top of the lobes, the taper rollers are assisted by the action of spring 26 into a run out position on the cam form, indicated at (c) in Figure 3. In the run out position, the mirror may lie at an angle of perhaps somewhere between $70^{\circ}$ and $110^{\circ}$ from its detent position. To return the mirror to its detent position from the run out position, the A-frame 11 and hence also the shaft 13 must again be forcefully rotated so that the taper rollers 32 are caused to rise up the lobes of their

notches 34 to their maximum rise position and then slightly beyond so that they fall under the action of spring 26 back into their respective notches 34.

From Figure 2, it will be seen how the rollers 32 are radially tapered, that is, if an imaginary line is drawn tangential to the surface of each roller it will pass through the axis of rotation of the shaft 13. This arrangement, with the matching taper of the profiled track, ensures that line rolling contact between the rollers and the track is maintained at all times. This reduces the possibility of any undesirable play which would give rise to vibration of the mirror when the vehicle was being driven. It also ensures that as the parts wear, any slack is taken up by the spring 26.

It will be appreciated that the hinge is not restricted to use for mounting mirrors on vehicles but can be used for other applications as well including, for example, mounting doors. Clearly, the cam form may be altered to suit the requirements of the particular application in which the hinge is to be used.

CLAIMS:

1. A hinge in which first and second members (12,11) are hinged about a hinge axis, the hinge further comprising a detend mechanism which comprises a camming surface (33) on the first member (12) extending at least partly around the hinge axis, at least one roller (32) mounted on the second member offset from the hinge axis for rotation about an axis extending towards the hinge axis and biassing means (26) for urging said roller (32) into rolling contact with the camming surface, said roller tapering towards the hinge axis.

2. A hinge as claimed in Claim 1 wherein the camming surface is shaped so that said roller maintains line contact with the camming surface during hinging of the two members.

3. A hinge as claimed in Claim 1 or Claim 2 wherein at least two such rollers are provided spaced around the hinge axis.

4. A hinge as claimed in Claim 1, Claim 2 or Claim 3 wherein the or each roller axis is at right angles to the hinge axis.

5.    A hinge as claimed in Claim 4 wherein two rollers are provided, the roller being journalled on either end of a pin (31) extending through the second member.

6.    A hinge as claimed in any preceding claim wherein the camming surface is formed with a notch (34) defining a position for said roller corresponding to a detent positon of the second member relative to the first member.

7.    A hinge as claimed in Claim6 wherein the camming surface is also formed with a lobe on one side of the notch, so that once the two members are hinged so that the roller rides out of the notch onto the lobe, the biassing means assist further hinging of the two members.

8.    A hinge as claimed in Claim 7 wherein a pair of such lobes are formed to either side of the notch.

9.    A hinge as claimed in any preceding claim wherein the hinge axis is provided by a shaft (13) which is fixed for rotation together with the second member (11) and the said biassing means comprises a helical spring (26), one end of which is seated axially on the shaft.

10.    A hinge as claimed in Claim 9 including a split taper sleeve (25) for receiving the shaft, the sleeve being urged by the bias of the helical spring against a frusto-conical surface of the first member thereby acting to centralise the shaft on the hinge axis.

11.    A hinge as claimed in Claim 10 wherein the frusto-conical surface is provided by a thrust ring (23) which is retained in a hole in the first member.

12.    A vehicle mirror wherein a mirror is carried by one member of a hinge as claimed in any preceding claim and the other member is for attachment to a vehicle.

0139509

FIG. 1.

FIG. 2.

FIG. 3.